(19) Europäisches Patentamt
European Patent Office
Office européen des brevets

(11) EP 3 188 299 A1

(12) **EUROPEAN PATENT APPLICATION**
published in accordance with Art. 153(4) EPC

(43) Date of publication:
**05.07.2017 Bulletin 2017/27**

(21) Application number: **15834938.1**

(22) Date of filing: **03.06.2015**

(51) Int Cl.:
***H01M 10/052*** *(2010.01)* ***H01M 2/16*** *(2006.01)*
***H01M 4/40*** *(2006.01)* ***H01M 10/0566*** *(2010.01)*

(86) International application number:
**PCT/JP2015/066097**

(87) International publication number:
**WO 2016/031335 (03.03.2016 Gazette 2016/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **29.08.2014 JP 2014176619**

(71) Applicant: **Nitto Denko Corporation**
**Ibaraki-shi, Osaka 567-8680 (JP)**

(72) Inventors:
- **POPOVICI, Daniel**
**Ibaraki-shi**
**Osaka 567-8680 (JP)**
- **SHIBATA, Shusaku**
**Ibaraki-shi**
**Osaka 567-8680 (JP)**
- **MINE, Keita**
**Ibaraki-shi**
**Osaka 567-8680 (JP)**
- **NAKAMURA, Toshitaka**
**Ibaraki-shi**
**Osaka 567-8680 (JP)**

(74) Representative: **Hoffmann Eitle**
**Patent- und Rechtsanwälte PartmbB**
**Arabellastraße 30**
**81925 München (DE)**

# (54) LITHIUM METAL SECONDARY BATTERY

(57) The lithium metal secondary battery includes a negative electrode active material layer containing lithium metal, a positive electrode active material layer, and a separator disposed between the negative electrode active material layer and the positive electrode active material layer. The separator is porous and contains ion conducting inorganic oxide, and an electrolyte is present in the separator and in the positive electrode active material layer.

FIG. 1

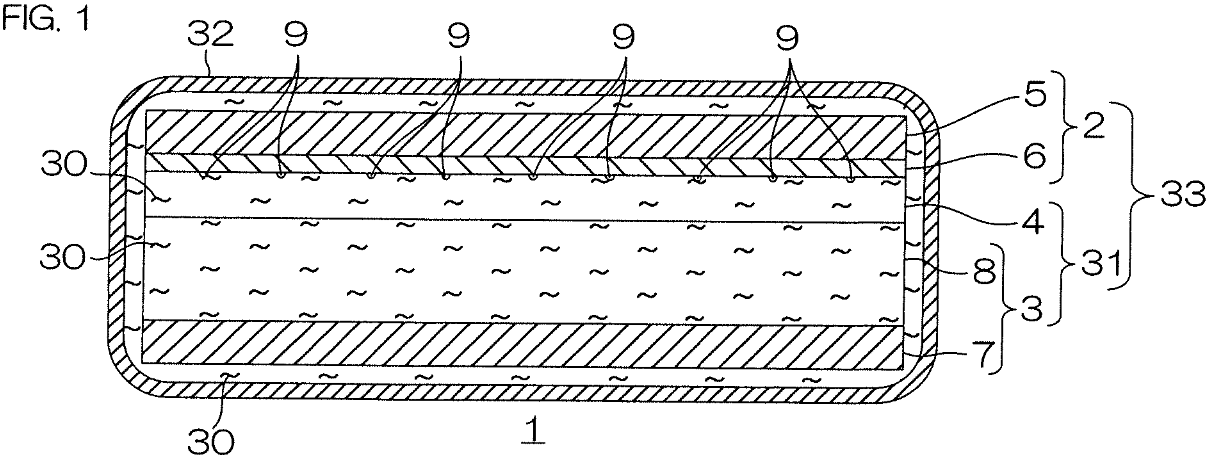


EP 3 188 299 A1

## Description

### TECHNICAL FIELD

The present invention relates to a lithium metal secondary battery.

### BACKGROUND ART

Lithium metal has a very high theoretical capacity density, and therefore conventionally, lithium metal secondary batteries in which lithium metal is used have been developed. In lithium metal secondary batteries, lithium metal is used for a negative electrode, a porous body composed of, for example, lithium-manganese composite oxide, is used for a positive electrode, and a porous polymer is used for a separator; and lithium metal secondary batteries have a structure in which these are immersed in an organic electrolyte.

However, lithium metals form dendrite when repeatedly charged and discharged, and it pierces the separator, causing disadvantageous short circuit. Therefore, for practical use, further improvement is demanded.

To solve the disadvantage, lithium ion secondary batteries, in which lithium is not deposited as lithium metal but is allowed to be present in ion status, have been developed and put into practical use. Lithium ion secondary batteries are widely used in various electric and electronic devices such as mobile phones and laptop computers.

However, in lithium ion secondary batteries, graphite and lithium composite oxide such as lithium cobalt oxide are used as the negative electrode and the positive electrode instead of lithium metal, and therefore compared with lithium metal secondary batteries, electric capacity is poor. Also, with demand for rapid increase in battery capacity, development of batteries in which lithium metal with a high theoretical capacity density is used is further demanded.

All-solid-state secondary batteries have been also proposed as a secondary battery in which lithium metal is used. In all-solid-state batteries, solid electrolyte membrane is used instead of liquid organic electrolyte and porous polymer (ref: Patent Document 1).

The all-solid-state battery proposed in Patent Document 1 includes lithium metal as a negative electrode, lithium vanadium oxide as a positive electrode, and lithium phosphous oxynitride as a solid electrolyte membrane disposed between the negative electrode and the positive electrode.

### Citation List

### Patent Document

Patent Document 1: U.S. patent publication 2010/0285372

### SUMMARY OF THE INVENTION

### PROBLEM TO BE SOLVED BY THE INVENTION

However, in all-solid-state batteries, a solid electrolyte membrane is used instead of liquid electrolyte, and therefore there is a disadvantage in that ion conductivity between the negative electrode-positive electrodes is not good. Therefore, further improvement is demanded for practical use for all-solid-state batteries as well.

An object of the present invention is to provide a battery with a new system, i.e., dendrite growth is suppressed in secondary batteries in which lithium metal is used.

### MEANS FOR SOLVING THE PROBLEM

A lithium metal secondary battery of the present invention includes a negative-electrode active material layer containing lithium metal, a positive-electrode active material layer, and a separator disposed between the negative-electrode active material layer and the positive-electrode active material layer, wherein the separator is porous and contains ion-conductive inorganic oxide, and an electrolyte is present in the separator and the positive-electrode active material layer.

In the lithium metal secondary battery of the present invention, it is preferable that the separator is formed by an aerosol deposition method.

In the lithium metal secondary battery of the present invention, it is preferable that the inorganic oxide contains a mixture of lithium orthosillicate and lithium phosphate.

In the lithium metal secondary battery of the present invention, it is preferable that the electrolyte contains ionic electrolyte.

In the lithium metal secondary battery of the present invention, it is preferable that the separator thickness is 2 μm or more and 15 μm or less.
In the lithium metal secondary battery of the present invention, it is preferable that an oxidizing agent is further included between the negative-electrode active material layer and the separator.

Effects of the Invention

The lithium metal secondary battery of the present invention can suppress dendrite generation.

BRIEF DESCRIPTION OF THE DRAWINGS

FIG. 1 shows a schematic diagram of an embodiment of the lithium metal secondary battery of the present invention.
FIG. 2 is a schematic diagram illustrating the configuration of an aerosol deposition device used for a method for producing a lithium metal secondary battery of the present invention.
FIG. 3 shows a diagram of examination for evaluating flexibility.
FIG. 4 shows a processed SEM image of a lithium metal-separator interface of the lithium metal secondary battery of Example 1.
FIG. 5 shows a processed SEM image of a lithium metal-separator interface of the lithium metal secondary battery of Comparative Example 1.

DESCRIPTION OF EMBODIMENTS

As shown in FIG. 1, a lithium metal secondary battery 1 includes a negative electrode 2, a positive electrode 3, a separator 4, an electrolyte 30, and an exterior 32.
The negative electrode 2 includes a negative electrode current collector 5 and a negative-electrode active material layer 6.
The negative electrode current collector 5 can be those having electron conductivity and those capable of holding the negative-electrode active material layer 6, and examples thereof include metal foil such as aluminum foil, copper foil, nickel foil, and gold foil.
The negative electrode current collector 5 has a thickness of, for example, 0.1 μm or more, preferably 0.25 μm or more, and for example, 50 μm or less, preferably 35 μm or less.
The negative-electrode active material layer 6 is laminated on the surface (lower face) of the negative electrode current collector 5, and is composed of lithium metal (Li).
The negative electrode active material layer 6 has a thickness of, for example, 0.05 μm or more, preferably 0.1 μm or more, and for example, 50 μm or less, preferably 35 μm or less.
The positive electrode 3 includes a positive electrode current collector 7 and a positive-electrode active material layer 8.
The positive electrode current collector 7 can be those having electron conductivity, and those capable of holding the positive-electrode active material layer 8, and examples thereof include metal foil such as aluminum foil, copper foil, nickel foil, and gold foil.
The positive electrode current collector 7 has a thickness of, for example, 1 μm or more, preferably 10 μm or more, and for example, 100 μm or less, preferably 50 μm or less.
The positive-electrode active material layer 8 is laminated on the surface (upper face) of the positive electrode current collector 7.
The positive-electrode active material layer 8 is formed from a positive electrode composition. The positive electrode composition contains, for example, a positive electrode active material.
The positive electrode active material is not particularly limited, and examples thereof include lithium composite oxides such as lithium cobalt oxide, lithium nickel oxide, lithium manganese oxide, lithium iron phosphate, lithium manganese phosphate, lithium iron sulfurate and modified substance thereof, and sulfur materials such as metal sulfides, lithium sulfides, and sulfur itself. These can be used singly, or can be used in combination of two or more.
Preferably, lithium composite oxides are used, and more preferably, lithium cobalt oxide is used.
The shape of the positive electrode active material is not particularly limited as long as it is particles (powder), and examples thereof include bulk, needle state, platy, and layered. The bulk shape includes, for example, spherical, rectangular parallelepiped, crushed, or a deformed shape therefrom.
The positive electrode active material has an average particle size of, for example, 0.1 μm or more, preferably 0.2 μm or more, and for example, 15 μm or less, preferably 8 μm or less.

In the present invention, the average particle size is a median size ($D_{50}$), and for example, is measured by a laser diffraction scattering particle size distribution analyzer (manufactured by Nikkiso Co., Ltd., microtrac MT 3000).

The positive electrode composition can contain, for example, additives such as a current collecting material and a binder.

The current collecting material improves electric conductivity of the positive electrode 3, and examples thereof include a carbon material and a metal material. Examples of the carbon material include graphites such as natural graphite and artificial graphite, carbon blacks such as acetylene black and Ketjen Black, and amorphous carbon such as needle coke. Examples of the metal material include copper and nickel. These can be used singly, or can be used in combination of two or more.

Preferably, carbon material is used, and more preferably, carbon black is used.

The current collecting material content relative to 100 parts by mass of the positive electrode active material is, for example, 1 part by mass or more, preferably 2 parts by mass or more, and for example, 20 parts by mass or less, preferably 10 parts by mass or less.

The binder can be those binders that bind the positive electrode active material, and examples thereof include polymers such as polyvinylidene fluoride, polytetrafluoroethylene, polyethylene, polyvinyl acetate, styrene-butadiene rubber, acrylonitrile rubber, and carboxymethyl cellulose. These can be used singly, or can be used in combination of two or more.

The binder content relative to 100 parts by mass of the positive electrode active material is, for example, 1 part by mass or more, preferably 2 parts by mass or more, and for example, 20 parts by mass or less, preferably 10 parts by mass or less.

The positive-electrode active material layer 8 is preferably porous.

The positive-electrode active material layer 8 has a porosity of, for example, 10% or more, preferably 20% or more, more preferably 35% or more, and for example, 80% or less, preferably 65% or less.

In the present invention, the porosity can be calculated by determining a relative density p (= w/v) from the mass w and the volume v (= width × length × thickness) of the measurement subject (positive-electrode active material layer 8, etc.), and then calculating using the formula below.

$$\text{Porosity} = \{1-(\rho/\rho')\} \times 100$$

P' represents theoretical density, and for example, can be a density when a film with no gap at all inside is molded from the material of the measurement subject.

The inside positive-electrode active material layer 8 can be filled with the electrolyte 30 (described later) in this manner, and excellent ion conductivity can be achieved.

The positive electrode active material layer 8 has a thickness of, for example, 30 μm or more, preferably 50 μm or more, and for example, 200 μm or less, preferably 100 μm or less.

The separator 4 is disposed between the negative-electrode active material layer 6 and the positive-electrode active material layer 8 such that one surface (upper face) of the separator 4 is in contact with the negative-electrode active material layer 6, and the other surface (lower face) of the separator 4 is in contact with the positive-electrode active material layer 8. The separator 4 contains ion conductive inorganic oxide, and is porous. Preferably, the separator 4 is composed of a porous ion conductive inorganic oxide.

The ion conductive inorganic oxide is not limited as long as it is inorganic oxide that can conduct lithium ion, and examples thereof include a mixture ($Li_4SiO_4Li_3PO_4$) of lithium orthosillicate and lithium phosphate, lithium boron phosphate ($Li_xBPO_4$, where $0 < \times \leq 0.2$), and lithium phosphorus oxynitride (LiPON). These can be used singly, or can be used in combination of two or more. Preferably, a mixture of lithium orthosillicate and lithium phosphate is used.

The mixing ratio of lithium orthosillicate to lithium phosphate (lithium orthosillicate: lithium phosphate) is, in mass ratio, for example, 10: 90 to 90: 10, preferably 30: 70 to 70: 30.

The ion conductive inorganic oxide has an ion conductivity of, for example, $1 \times 10^{-8}$ S/cm or more, preferably $1 \times 10^{-7}$ S/cm or more, and for example, $1 \times 10^{-1}$ S/cm or less. Ion conductivity is measured by electrochemical impedance spectroscopy (EIS). For example, an impedance/gain-phase analyzer (manufactured by Solartron Analytical) may be used.

Ion conductive inorganic oxide is preferably formed into particles. The particles can be, to be specific, bulk, needle state, platy, and layered. The bulk shape includes, for example, spherical, a rectangular parallelepiped, crushed, or a deformed shape therefrom.

The ion conductive inorganic oxide has an average particle size of, for example, 0.1 μm or more, preferably 0.5 μm or more, and for example, 10 μm or less, preferably 2.5 μm or less.

The separator 4 has a porosity of, for example, 4% or more, preferably 8% or more, and for example, 85% or

less, preferably 75% or less, more preferably 50% or less, particularly preferably 30% or less.

The separator 4 has an average pore size of, for example, 1 nm or more, preferably 10 nm or more, and for example, 2000 nm or less, preferably 700 nm or less, more preferably 100 nm or less.

The average pore size is determined by, for example, cutting the separator 4 in the thickness direction, observing an enlarged SEM image of the cut section with a scanning electron microscope (SEM), and measuring the average value of the maximum length of the pore size of the gap shown in the SEM image.

The separator 4 has a thickness of, for example, 1 $\mu$m or more, preferably 2 $\mu$m or more, and for example, 20 $\mu$m or less, preferably 15 $\mu$m or less, more preferably 10 $\mu$m or less.

An oxidizing agent 9 is provided between the separator 4 and the negative-electrode active material layer 6. Preferably, the oxidizing agent 9 is attached to the surface (upper face) of the separator 4. The lithium metal secondary battery 1 achieves temporary self-healing, for example, at the time of breaking such as nail penetration, and battery performance can be safely deactivated in this manner.

Examples of the oxidizing agent 9 include alkali metal nitrate such as lithium nitrate ($LiNO_3$) and sodium nitrate ($NaNO_3$); alkali metalperoxide such as lithium peroxide ($Li_2O_2$) and sodium peroxide ($Na_2O_2$); alkali metal bromineoxide such as sodium bromate ($NaBrO_3$) and lithium bromate ($LiBrO_3$); and manganese dioxide ($MnO_2$). These can be used singly, or can be used in combination of two or more.

Preferably, alkali metal nitrate is used, more preferably, lithium nitrate is used.

The oxidizing agent 9 is preferably formed into particles. The particles can be, to be specific, bulk, needle state, platy, and layered. The bulk shape includes, for example, spherical, rectangular parallelepiped, crushed, or a deformed shape therefrom.

The oxidizing agent 9 preferably has an average particle size that is larger than the average pore size of the separator 4. To be specific, for example, 1 nm or more, preferably 10 nm or more, more preferably 100 nm or more, and for example, 2000 nm or less, preferably 1000 nm or less, more preferably 800 nm or less. By setting the average particle size of the oxidizing agent within the above-described range, clogging of the pores of the separator 4 can be prevented, and the functions of the separator 4 and the oxidizing agent 9 can be effectively brought out.

The oxidizing agent 9 is attached to the surface of the separator 4 or the negative-electrode active material layer 6 in an amount of, for example, 0.005 $mg/cm^2$ or more, preferably 0.01 $mg/cm^2$ or more, and for example, 5 $mg/cm^2$ or less, preferably 2 $mg/cm^2$ or less.

The amount of the oxidizing agent 9 attached is calculated, for example, by measuring a difference in mass between the separator 4 before the oxidizing agent 9 attached and the separator 4 after the oxidizing agent 9 is attached using a precision scale.

The oxidizing agent 9 can be formed, as shown in FIG. 1, partially so as to be dotted intermittently in a surface direction perpendicular to the thickness direction, or can be formed, although not shown, so as to be a layer (sheet) extending continuously in the surface direction.

When the oxidizing agent 9 is a layer, the oxidizing agent layer has a thickness of, for example, 5 to 200 nm.

The electrolyte 30 is present inside the separator 4.

Preferably, the electrolyte 30 is present inside the separator 4 and the positive-electrode active material layer 8. That is, gaps inside the separator 4 and the positive electrode active material layer 8 are filled with the electrolyte 30. To be more specific, the lithium metal secondary battery 1 is filled with the electrolyte 30 so that the negative electrode 2, the positive electrode 3, and the separator 4 are immersed.

The electrolyte 30 can be a liquid that allows migration of lithium ion between the negative electrode 2 and the positive electrode 3, and for example, those electrolytes that are used for conventional lithium ion secondary batteries and lithium metal secondary batteries can be used.

The electrolyte 30 is, for example, a nonaqueous electrolyte, and preferably contains an organic solvent and ionic electrolyte.

Examples of the organic solvent include cyclic carbonates such as ethylenecarbonate, propylene carbonate, butylene carbonate, and vinylene carbonate; chain carbonates such as methylcarbonate, methyl ethyl carbonate, and diethylcarbonate; furans such as tetrahydrofuran and 2-methyltetrahydrofuran; $\gamma$-butyrolactone; 1,2-dimethoxyethane; 1,3-dioxolane; 4-methyl-1,3-dioxolane; methyl formate; methyl acetate; methyl propionate; acetinitrile; and N,N-dimethylformamide. These can be used singly, or can be used in combination of two or more.

Preferably, cyclic carbonate and chain carbonate are used, and more preferably, cyclic carbonate and chain carbonate are used in combination.

The ionic electrolyte is used for improvement in ion conductivity, and for example, lithium salt is used. Examples of the lithium salt include $LiPF_6$, $LiBF_4$, $LiAsF_6$, $LiSiF_6$, $LiClO_4$, $LiB(C_6H_5)_4$, $LiSbSO_3$, $LiCH_3SO_3$, $LiCF_3SO_3$, $LiC_4F_9SO_3$, $Li(CF_3SO_2)_2N$, $LiC(SO_2CF_3)_3$, $LiAlCl_4$, and LiCl. These can be used singly, or can be used in combination of two or more.

In view of high ion conductivity, preferably, $LiPF_6$ and $Li(CF_3SO_2)_2N$ are used.

The electrolyte 30 has an ionic electrolyte content of, for example, 0.1 mol/L or more, preferably 0.4 mol/L or more, and for example, 10 mol/L or less, preferably 5 mol/L or less.

The electrolyte 30 preferably contains ion liquid. The lithium metal battery has more excellent safety in this manner.

Examples of the ion liquid include N-methyl-N-propylpiperidinium bis(trifluoromethanesulfonyl) imide, N-methyl-N-propylpyrrolidinium bis(trifluoromethanesulfonyl) imide, 1-methyl-3-propylimidazoliumbis(trifluoromethanesulfonyl) imide, and 1-ethyl-3-butylimidazoliumtetrafluoroborate. These can be used singly, or can be used in combination of two or more.

The electrolyte 30 has an ion liquid content of, for example, 10% by volume or more, preferably 30% by volume or more, more preferably 40% by volume or more, and for example, 100% by volume or less, preferably 90% by volume or less, more preferably 60% by volume or less.

The exterior 32 seals in a battery cell 33 (that is, structure of negative electrode 2/separator 4/positive electrode 3) and the electrolyte 30 inside the exterior 32.

A known or a commercially available product can be used for the exterior 32, and examples thereof include a laminate film and a metal can.

Examples of a layer forming the laminate film include metal layers such as aluminum, iron, copper, nickel, titanium, and stainless steel; and metal oxide layers such as silicon oxide and aluminum oxide; and polymer layers such as polyethylene, polypropylene, polyethylene terephthalate, polyamide, and ABS resin. These can be used in a single layer, or can be used in combination of two or more layers.

Examples of the metal can material include aluminum, iron, copper, nickel, titanium, and stainless steel. These can be used singly, or can be used in combination of two or more.

A method for producing the lithium metal secondary battery 1 is described next.

The lithium metal secondary battery 1 is produced, for example, by the following steps: a step of laminating the positive-electrode active material layer 8 to the positive electrode current collector 7 to produce the positive electrode 3, a step of laminating the separator 4 to the positive-electrode active material layer 8 to produce the separator/positive electrode assembly (SEA 31), a step of attaching the oxidizing agent 9 to the SEA 31, and a step of laminating the negative electrode 2 to the SEA 31.

First, the positive-electrode active material layer 8 is laminated on the positive electrode current collector 7.

To be specific, a slurry containing the positive electrode composition is applied on the surface of the positive electrode current collector 7.

The slurry is produced by mixing the positive electrode composition and the solvent.

Examples of the solvent include, in addition to the above-described organic solvent, ketones such as acetone and methyl ethyl ketone; and N-methylpyrrolidone. Examples of the solvent also include water-based solvents such as water, and alcohols such as methanol, ethanol, propanol, and isopropanol. These can be used singly, or can be used in combination of two or more.

The application method includes known methods such as, for example, doctor blade, roll coating, screen coating, and gravure coating.

The application amount is, based on the positive electrode active material, for example, 3.5 to 50mg/$cm^2$.

Then, the slurry is dried, and a coated film is formed.

As necessary, the coated film is compressed. The compressing method includes a known method such as, for example, a method by pressing the coated film with a roller or a flat plate.

A positive electrode 3 is produced in this manner: the positive electrode 3 is porous and includes the positive electrode current collector 7 and the positive-electrode active material layer 8 which is laminated on one side of the positive electrode current collector 7.

The positive-electrode active material layer 8 can be produced by applying the slurry containing the positive electrode composition to the surface of the positive electrode current collector 7, and also for example, can be produced by aerosol deposition to be described later.

Then, the separator 4 is laminated on the positive-electrode active material layer 8.

The separator 4 can be laminated, for example, by methods such as aerosol deposition, cold spraying, hot spraying, and plasma spraying.

Preferably, aerosol deposition (AD method, gas deposition method, and vapor deposition method) is used. In this manner, the porous body composed of the ion conductive inorganic oxide is reliably formed on the surface of the positive-electrode active material layer 8. Furthermore, a porous body with a small pore size can be formed.

In the following, the method for forming the separator 4 using the aerosol deposition (hereinafter AD method.) is described.

To form the separator by the AD method, for example, an aerosol deposition device 10 shown in FIG. 2 is used.

The aerosol deposition device 10 includes a film-forming chamber 11, an aerosol chamber 12, and a carrier gas transportation device 13.

The film-forming chamber 11 is a film-forming room for forming the separator 4 on the surface (to be specific, the positive-electrode active material layer 8 surface) of the positive electrode 3, and includes the substrate holder 14,

a thermometer (not shown) for measuring the temperature in the film-forming chamber 11, and a pressure gauge (not shown) for measuring the pressure in the film-forming chamber 11.

The substrate holder 14 includes a support 15, a pedestal 16, and a stage 17.

The support 15 is provided to connect the pedestal 16 and the stage 17, so as to penetrate the ceiling wall of the film-forming chamber 11 and to project downward (downward in the vertical direction).

The pedestal 16 is provided at one end portion (lower end portion) in the longitudinal direction of the support 15 so that the positive electrode 3 is held and fixed in the film-forming chamber 11.

The stage 17 is provided on the upper face of the ceiling wall of the film-forming chamber 11 and is connected to the other end portion (upper end portion) of the longitudinal direction of the support 15 so that at the time of forming the separator 4, the positive electrode 3 can be moved in any direction (x direction (front-back directions), y direction (left-right directions), z direction (up-down direction), and $\theta$ direction (rotation direction)). In this manner, the stage 17 is connected to the pedestal 16 through the support 15, and the stage 17 allows the pedestal 16 to move.

Furthermore, a mechanical booster pump 18 and a rotary pump 19 are connected to the film-forming chamber 11.

The mechanical booster pump 18 and the rotary pump 19 are sequentially connected to the film-forming chamber 11 to reduce the pressure inside the film-forming chamber 11, and to reduce the pressure inside the aerosol chamber 12, which communicates with the film-forming chamber 11 through a connection pipe 20 (described later).

The aerosol chamber 12 is a storage that stores the material of the separator 4 (that is, ion conductive inorganic oxide powder), and includes a vibratory device 21, and a pressure gauge (not shown) for measuring the pressure inside the aerosol chamber 12.

The vibratory device 21 is a device for vibrating the aerosol chamber 12 and the material for the separator 4 inside the aerosol chamber 12, and a known shaker is used.

To the aerosol chamber 12, the connection pipe 20 is connected.

The connection pipe 20 is a pipe for transporting the aerosolized material (hereinafter aerosol) from the aerosol chamber 12 to the film-forming chamber 11, and disposed so that one end portion (upstream side end portion) thereof is connected to the aerosol chamber 12, and the other end portion penetrates the bottom wall of the film-forming chamber 11 and extends toward the pedestal 16. In the film-forming chamber 11, a film-forming nozzle 22 is connected to the other end portion (downstream-side end portion) of the connection pipe 20.

The film-forming nozzle 22 is a spray device for spraying the aerosol to the surface of the positive-electrode active material layer 8. In the film-forming chamber 11, the film-forming nozzle 22 is disposed so that its spray port faces the pedestal 16 at the upper side in the vertical direction. To be specific, the film-forming nozzle 22 is disposed so that its spray port faces the pedestal 16 (particularly, the surface of the positive electrode active material layer 8 disposed on the pedestal 16) with a predetermined space (e.g., 1 to 100 mm, particularly 20 to 80 mm) in up-down direction. In this manner, the aerosol supplied from the aerosol chamber 12 can be sprayed on the surface of the positive-electrode active material layer 8.

The shape of the spray port of the film-forming nozzle 22 is not particularly limited, and is set suitably in accordance with, for example, the amount of the aerosol sprayed and the sprayed range.

A connection pipe on-off valve 23 is interposed in the connection pipe 20 in the flowing direction. For the connection pipe on-off valve 23, a known on-off valve such as a solenoid valve is used.

The carrier gas transportation device 13 includes a carrier gas cylinder 25.

The carrier gas cylinder 25 is a cylinder that stores carrier gas such as, for example, oxygen gas, helium gas, argon gas, nitrogen gas, and air gas, and is connected to the aerosol chamber 12 through a gas pipe 26.

The gas pipe 26 is a pipe for transporting the carrier gas from the carrier gas cylinder 25 to the aerosol chamber 12, and its upstream end portion is connected to the carrier gas cylinder 25, and the downstream-side end portion is connected to the aerosol chamber 12.

A gas flow meter 27 is interposed in the gas pipe 26 in the flowing direction. The gas flow meter 27 is a device that adjusts the gas flow rate inside the gas pipe 26 and detects the flow rate, and is not particularly limited. A known flow meter is used.

Furthermore, a gas pipe on-off valve 28 is interposed in the gas pipe 26 in the flowing direction at a downstream side of the gas flow meter 27. For the gas pipe on-off valve 28, for example, a known on-off valve such as a solenoid valve is used.

To form a separator 4 with such an aerosol deposition device 10, first, the film-forming nozzle 22 and the positive-electrode active material layer 8 are disposed to face each other in spaced-apart relation (disposing step). To be specific, the positive electrode active material layer 8 is disposed on the pedestal 16 so that the surface of the positive electrode active material layer 8 faces the film-forming nozzle 22 side (lower side).

Meanwhile, the above-described material of the separator 4 (ion conductive inorganic oxide powder) is introduced into the aerosol chamber 12.

Before the introduction, the material of the separator 4 can be dried in advance.

The drying temperature is, for example, 50 to 150°C, and the drying time is, for example, 1 to 24 hours.

Next, in this method, the gas pipe on-off valve 28 is closed, and the connection pipe on-off valve 23 is opened, and the mechanical booster pump 18 and the rotary pump 19 are driven, thereby reducing the pressure inside the film-forming chamber 11 and the aerosol chamber 12.

The pressure inside the film-forming chamber 11 is, for example, 5 to 80Pa, and the pressure inside the aerosol chamber 12 is, for example, 5 to 80Pa.

Next, in this method, the material of the separator 4 is vibrated by the vibratory device 21 in the aerosol chamber 12, and the gas pipe on-off valve 28 is opened to feed the carrier gas from the carrier gas cylinder 25 to the aerosol chamber 12. In this manner, the material of the separator 4 can be aerosolized, and the generated aerosol can be transported to the film-forming nozzle 22 through the connection pipe 20. At this time, the aerosol collides with the internal wall of the film-forming nozzle 22 and crashes, and particles with a smaller particle size are formed.

The flow rate of the carrier gas adjusted by the gas flow meter 27 is, for example, 0.1 L/min or more, preferably 30 L/min or more, and for example, 80 L/min or less, preferably 50 L/min or less.

Next, in this method, the particles of the crushed material are sprayed from the spray port of the film-forming nozzle 22 toward the surface of the positive-electrode active material layer 8 (spraying step).

The pressure inside the aerosol chamber 12 while spraying the aerosol is, for example, 50 to 80000Pa. The pressure inside the film-forming chamber 11 is, for example, 10 to 1000Pa or less.

The temperature inside the aerosol chamber 12 while spraying the aerosol is, for example, 0 to 50°C.

While spraying the aerosol, preferably, by suitably moving the stage 17, aerosol can be sprayed evenly on the surface of the positive-electrode active material layer 8.

In such a case, the moving speed of the stage 17 (that is, the moving speed of the film-forming nozzle 22) is, for example, 0.1 to 50 mm/sec.

The separator 4 can be formed on the surface of the positive-electrode active material layer 8 (lower side in the vertical direction) in this manner.

Thus, the SEA 31 including the positive electrode 3 and the separator 4 can be produced.

In the description above, the stage 17 is moved in the spraying step. However, the depending on the aerosol deposition device 10, the film-forming nozzle 22 can be moved so that the relative velocity of the positive-electrode active material layer 8 and the film-forming nozzle 22 is 0.1 to 50 mm/sec.

Also depending on the relative velocity and the thickness of the separator 4, the above-described spraying step can be repeated in a plural time. The number of the repetition is, preferably 1 to 10 times.

Although the film-forming nozzle 22 and the pedestal 16 are disposed to face each other in up-down directions, for example, the film-forming nozzle 22 and the pedestal 16 can be disposed to face each other in left-right directions (direction perpendicular to up-down directions).

Then, the oxidizing agent 9 is attached to the SEA 31.

To be specific, the oxidizing agent 9 is attached to the surface of the separator 4 by, for example, powder spraying, AD method, etc.

The oxidizing agent 9 can be attached to the surface of the negative-electrode active material layer 6 as well.

Then, the negative electrode 2 is laminated to the SEA 31.

First, the negative electrode 2 is prepared. The negative electrode 2 is produced by laminating the negative electrode active material layer 6 on the negative electrode current collector 5.

Next, the negative electrode 2 is laminated on the SEA 31 so that the negative-electrode active material layer 6 side is in contact with the separator 4.

In this manner, a battery cell 33 (that is, structure of negative electrode 2/separator 4/positive electrode 3) is produced.

Then, a positive electrode lead (not shown) is attached to the positive electrode current collector 7, and a negative electrode lead (not shown) is attached to the negative electrode current collector 5, and thereafter, an electrolyte 30 is fed to the battery cell 33, and the battery cell 33 is sealed with an exterior 32 such as a laminate film.

The electrolyte 30 is fed to the battery cell 33 when the battery cell 33 is sealed with the exterior 32. To be specific, the electrolyte 30 is fed to the battery cell 33 so that the electrolyte 30 is sufficiently present in the separator 4 and the positive electrode active material layer 8. Preferably, the gaps inside the separator 4 and the positive electrode active material layer 8 are filled with the electrolyte.

After feeding the electrolyte 30, a known method is used to completely seal the battery cell with an exterior 32 such as a laminate film.

In this manner, the lithium metal secondary battery 1 is produced.

In such a lithium metal secondary battery 1, when lithium metal is used as the negative-electrode active material layer 6, and $LiCoO_2$ is used as the positive-electrode active material layer 8, an electrochemical reaction represented by the following formulas (1) to (3) occur.

[Chem. 1]

$$1.\ xLi \rightarrow xLi^{+} + xe^{-} \quad \text{(Negative electrode)}$$

$$2.\ Li_{1-x}CoO_2 + xLi^{+} + xe^{-} \rightarrow LiCoO_2 \quad \text{(Positive electrode)}$$

$$3.\ xLi + Li_{1-x}CoO_2 \underset{\text{Charge}}{\overset{\text{Discharge}}{\rightleftarrows}} LiCoO_2 \quad \text{(Whole)}$$

In such a lithium metal secondary battery 1, the separator 4 is a porous body containing an ion conductive inorganic oxide. Therefore, even charging and discharging are repeated, dendrite generation is suppressed in the negative electrode 2. The system is assumed to be as follows.

In a conventional alkali metal secondary battery in which nonwoven fabric such as polyethylene is used as a separator, lithium ion does not pass through the separator. Therefore, conductive path of lithium ion is limited, and lithium ion migrates in the limited specific conductive path. Therefore, lithium ion deposition is concentrated around the conductive path, and as a result, dendrite forms.

In contrast, in the lithium metal secondary battery of the present invention 1, the separator 4 is ion conductive inorganic oxide, and therefore conductive path of lithium ion is present entirely (or infinitively) in the ion conductive inorganic oxide. That is, lithium ion migration is not concentrated on only a specific path between the negative electrode-positive electrodes, but the lithium ion migration occurs in the entire separator homogeneously.

Therefore, at the separator-lithium metal interface, at the time of discharging, lithium metal deposits homogenously at the lithium metal surface, and at the time of charging, lithium ion is released homogenously from the entire lithium metal surface.

The separator 4 is a porous body, and is an inorganic oxide layer having very tiny micropores that are connected to each other. Therefore, even if dendrite forms, dendrite grows along the shape of the micropores winding largely, and therefore dendrite does not grow toward the positive electrode 3. Thus, short circuit based on dendrite can be reliably suppressed.

Furthermore, the separator 4 is a porous body, and the electrolyte 30 is present inside the separator 4. Therefore, not only the separator 4 that is solid, the electrolyte 30 allows the lithium ion migration. Therefore, ion conductivity is excellent compared with conventional all-solid-state secondary batteries in which a solid electrolyte is used.

Furthermore, the separator 4 has flexibility. Therefore, it is excellent in handleability, and has more freedom in battery design such as wound type batteries.

Furthermore, such a lithium metal secondary battery 1 further includes an oxidizing agent 9 between the negative-electrode active material layer 6 and the separator 4. Thus, when an internal short circuit is caused by piercing the lithium metal secondary battery 1 with a sharp metal such as a nail in the thickness direction, the battery functions are recovered temporally, and thereafter, the battery functions are gradually ceased (deactivated) without generation of smoke or fire. This is probably because the oxidizing agent 9 releases oxygen at the time of piercing, and the oxygen reacts with lithium metal (particularly, dendrite generated by piercing), and therefore an insulating layer (lithium oxide layer) is formed on the lithium metal surface, and the insulating layer plays a role to temporally protect and repairs the pierced damaged parts (damaged separator 4).

The shape of the alkali metal secondary battery is not limited, and for example, it can be a wound type battery of prism batteries or cylindrical batteries, or can be a laminate battery. Examples

The present invention is described next based on Examples and Comparative Examples, but the present invention is not limited to Examples below. The numeral values shown in Examples below can be replaced with the numeral values shown in embodiments (that is, upper limit value or lower limit value).

Example 1

(Production of positive electrode)

A positive electrode composition slurry was prepared by mixing 90 parts by mass of $LiCoO_2$ (average particle size ($D_{50}$)5 μm) as a positive electrode active material, 5 parts by mass of carbon powder as a conductive material, 5 parts by mass of polyvinylidene fluoride as a binder, and 400 parts by mass of N-methylpyrrolidone (NMP) as a solvent.

The slurry was applied on one side of aluminum foil (positive electrode current collector, thickness 15 μm) by doctor blade method, and dried, thereby producing a coated film.

Thereafter, the coated film was compressed with a compression roller, thereby forming a positive-electrode active material layer having a thickness of 50 μm. The positive electrode active material layer is a porous body, and had

a porosity of 50%.

The positive electrode was made in this manner.

(Formation of separator)

A separator was directly formed on the positive-electrode active material layer of the positive electrode by aerosol deposition.

To be specific, the aerosol deposition device (carrier gas: air gas) shown in FIG. 2 was prepared, and in its film-forming chamber (22°C), a positive electrode was set on the pedestal of the substrate holder.

At this time, adjustment was made so that the distance between the spray port of the film-forming nozzle and the positive-electrode active material layer surface was 20 mm.

Meanwhile, lithium ion conductive material ($Li_4SiO_4{\cdot}Li_3PO_4$(50:50 wt%), average particle size ($D_{50}$)0.75 μm, ion conductivity $2 \times 10^{-6}$ S/cm) was prepared, and it was introduced to a 500mL glass made aerosol chamber.

Thereafter, the gas pipe on-off valve was closed, and the connection pipe on-off valve was opened, and the mechanical booster pump and the rotary pump were driven, thereby decreasing the pressure inside the film-forming chamber and the aerosol chamber to 50Pa.

Then, a gas flow meter was used to adjust the flow rate of the air gas to 50 L/min, and the gas pipe on-off valve was opened while vibrating the aerosol chamber with a shaker. In this manner, the powder mixture is aerosolized in the aerosol chamber, and the produced aerosol was sprayed from the film-forming nozzle.

The pressure inside the aerosol chamber at this time was about 1000 to 50000Pa, and the pressure inside the film-forming chamber was about 200Pa.

Then, with the stage of the substrate holder, the pedestal to which the positive electrode was fixed was moved at a moving speed of 5 mm/sec in x-y direction, and the aerosol was sprayed from the film-forming nozzle to the positive-electrode active material layer surface.

The separator (porous body composed of ion conductive inorganic oxide) was formed on the positive electrode active material layer surface, thereby producing a separator/positive electrode assembly (SEA) in this manner. The separator had a thickness of 5 μm, a porosity of 10%, and an average pore size of 20 nm.

(Attachment of oxidizing agent)

Lithium nitrate particles ($LiNO_3$, average particle size ($D_{50}$)500 nm) were attached to the separator surface of SEA using a spray gun.

The amount of the lithium nitrate particles attached was, as measured by a precision scale, 0.01 to 0.05mg/$cm^2$.

(Production of negative electrode)

Lithium metal foil (negative-electrode active material layer, thickness 25 μm) was pressed onto copper foil (negative electrode current collector, thickness 30 μm), thereby producing a negative electrode.

(Preparation of electrolyte)

$LiPF_6$ was dissolved in a mixture solution of ethylene carbonate (EC) and dimethyl carbonate (DMC) of 50: 50(volume ratio) so that $LiPF_6$ was 2.0 mol/L, thereby preparing an electrolyte-containing organic solvent.

Lithium bis trifluoromethanesulfonimide ($Li(CF_3SO_2)_2N$;Li-TFSI) was dissolved in N-methyl-N-propylpiperidinium bis(trifluoromethanesulfonyl) imide (PP13-TFSI, ion liquid) so that lithium bis trifluoromethanesulfonimide was 0.4 mol/L, thereby preparing an electrolyte-containing ion liquid.

An electrolyte-containing organic solvent and the electrolyte-containing ion liquid were mixed at a volume ratio of 60: 40, thereby preparing an electrolyte.

(Production of lithium metal secondary battery)

• Example 1

The SEA and the negative electrode were laminated so that the separator was in contact with lithium metal foil, thereby producing a battery cell.

The battery cell was sealed with an aluminum laminate film. Before completely sealed, the electrolyte was sufficiently added so that the separator and the positive-electrode active material layer were completely wet, thereby filling the inside of the laminate film with the electrolyte.

A lithium metal secondary battery of Example 1 was made in this manner.

• Example 2

A lithium metal secondary battery of Example 2 was produced in the same manner as in Example 1, except that attachment of the oxidizing agent was not performed.

• Comparative Example 1

A battery cell was made using the positive electrode and the negative electrode that are the same as those in Example 1, and a nonwoven fabric separator (thickness 30 μm) was interposed between these two electrodes. The battery cell was sealed with an aluminum laminate film. The electrolyte was sufficiently added before completely sealed so that the nonwoven fabric separator and the positive-electrode active material layer were completely wet, thereby filling the inside the laminate film with the electrolyte.

A lithium metal secondary battery of Comparative Example 1 was made in this manner.

(Flexibility test)

A separator (porous body composed of ion conductive inorganic oxide) having a thickness of 5 μm was formed in the same manner as described above (Production of separator) on the aluminum foil (thickness 20 μm) surface, thereby producing a sample for flexibility test.

A cylinder 40 having a specific radius was used as a bending support. The sample 41 was wound around along the cylinder 40 so that the aluminum foil was in contact with the surface of the cylinder 40 in a semi-arc manner (ref: FIG. 3).

Thereafter, the separator surface at the bent region (portion A in FIG. 3) of the sample 41 was observed with a scanning electron microscope (SEM) to see if damages are present.

No damage was observed on the separator surface with any of the cylinders with a radius of 2.5 mm and a radius of 0.5 mm.

(Dendrite generation)

The batteries of Examples 1 to 2 and Comparative Example 1 were subjected to charge and discharge cycles, in which charge and discharge were repeated with a constant current between 4.2 to 2.7V. Charge and discharge cycles were performed 200 times with an electric current of 1.5 $mA/cm^2$.

Thereafter, the lithium metal secondary battery was decomposed, and the interface between the negative-electrode active material layer (Li metal) and the separator was observed with an SEM image. FIG. 4 and FIG. 5 show processed SEM images of Example 1 and Comparative Example 1.

As is clear from FIG. 5, it was confirmed that acicular or cylindrical lithium metal (dendrite) was formed at the interface between the negative electrode and the nonwoven fabric separator in the battery of Comparative Example 1.

Meanwhile, no dendrite formation at the interface between the negative electrode and the separator was confirmed in the battery of Example 1 shown in FIG. 4. In the battery of Example 2 as well, no dendrite formation at the interface between the negative electrode and the separator was confirmed in the SEM image as in the battery of Example 1.

(Examination)

It is clear that in the battery of Comparative Example 1, dendrite was formed at the interface between the negative electrode and the nonwoven fabric separator, and therefore further repetition of charge and discharge would form dendrite and there would be a danger in the end the dendrite would pierce the nonwoven fabric separator and reaches the positive electrode.

Meanwhile, no dendrite was formed in the battery of Example 1. The lithium metal foil surface kept the fine form. Therefore, it is clear that in the battery of Example 1, dendrite growth is unlikely even if further repetition of charge and discharge was performed.

(Nail penetration test: details on deactivation of battery performance)

An electric current source A was connected to the batteries of Examples 1 to 2 in parallel, and a high electric current was ensured until the end of the nail penetration test. For the electric current source A, a large lithium ion battery pack (commercially available product) that can provide a high electric current of 7A at a rated voltage of 3.9V for 2 minutes or more was used.

After connecting the electric current source A to the battery of Example 1, the circuit was left for 2 hours, and the voltage and the electric current were reduced to 0 mA before nail penetration. Then, the nail was penetrated to the batteries of Examples 1 to 2 in the thickness direction.
The average electric current value and the average voltage value are shown in Table 1.

[Table 1]

| | Observed value | Before nail penetration | 1 second after nail penetration | 20 seconds after nail penetration | 1 day after nail penetration |
|---|---|---|---|---|---|
| Example 1 | Electric current | 0(mA) | 5.4(A) | 0(mA) | 0(mA) |
| | Package voltage | 3.9(V) | 0.12(V) | 3.78(V) | 0(V) |
| Example 2 | Electric current | 0(mA) | 5.4(A) | 3(A) | 0(mA) |
| | Package voltage | 3.9(V) | 0.12(V) | 0.12(V) | 0(V) |

In the battery of Example 1, the electric current drastically increased through the penetrated region immediately after nail penetration, and the voltage dropped to 0.12V. Thereafter, the electric current decreased to 0A gradually, and the voltage recovered gradually. After 20 seconds, the values of the voltage were near the values before the nail penetration. Thus, it was confirmed that the battery of Example 1 has a function of recovering the battery function temporally. Thereafter, the battery functions gradually decreased without generating smoke or fire, and therefore safe deactivation of battery performance was confirmed.
Meanwhile, in the battery of Example 2, immediately after nail penetration, the electric current drastically increased through the penetrated region, and the voltage decreased to 0.12V. The excessive electric current continued to flow even after 20 seconds, and the voltage remained low.
While the illustrative embodiments and examples of the present invention are provided in the above description, such are for illustrative purpose only and it is not to be construed limitatively. Modification and variation of the present invention which will be obvious to those skilled in the art are to be covered in the following claims.

Industrial Applicability

The lithium metal secondary battery of the present invention is suitably used as a new system battery in which dendrite generation is suppressed.

Description of reference numeral

1 Lithium metal secondary battery
4 Separator
6 Negative electrode active material layer
8 Positive electrode active material layer
9 Oxidizing agent
30 Electrolyte

**Claims**

**1.** A lithium metal secondary battery comprising:

a negative-electrode active material layer containing lithium metal,
a positive-electrode active material layer, and
a separator disposed between the negative-electrode active material layer and the positive-electrode active material layer,

wherein the separator is porous and contains ion-conducting inorganic oxide, and
an electrolyte is present in the separator and the positive-electrode active material layer.

**2.** The lithium metal secondary battery of Claim 1, wherein the separator is formed by an aerosol deposition method.

**3.** The lithium metal secondary battery of Claim 1, wherein the inorganic oxide contains a mixture of lithium orthosillicate and lithium phosphate.

**4.** The lithium metal secondary battery of Claim 1, wherein the electrolyte contains an ionic electrolyte.

**5.** The lithium metal secondary battery of Claim 1, wherein the separator thickness is 2 μm or more and 15 μm or less.

**6.** The lithium metal secondary battery of Claim 1, further comprising an oxidizing agent between the negative-electrode active material layer and the separator.

FIG. 1

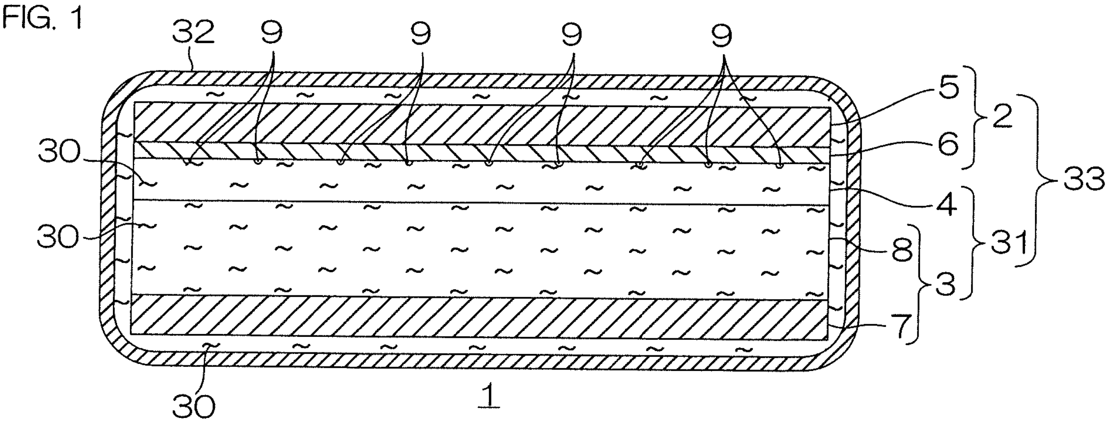


FIG. 2

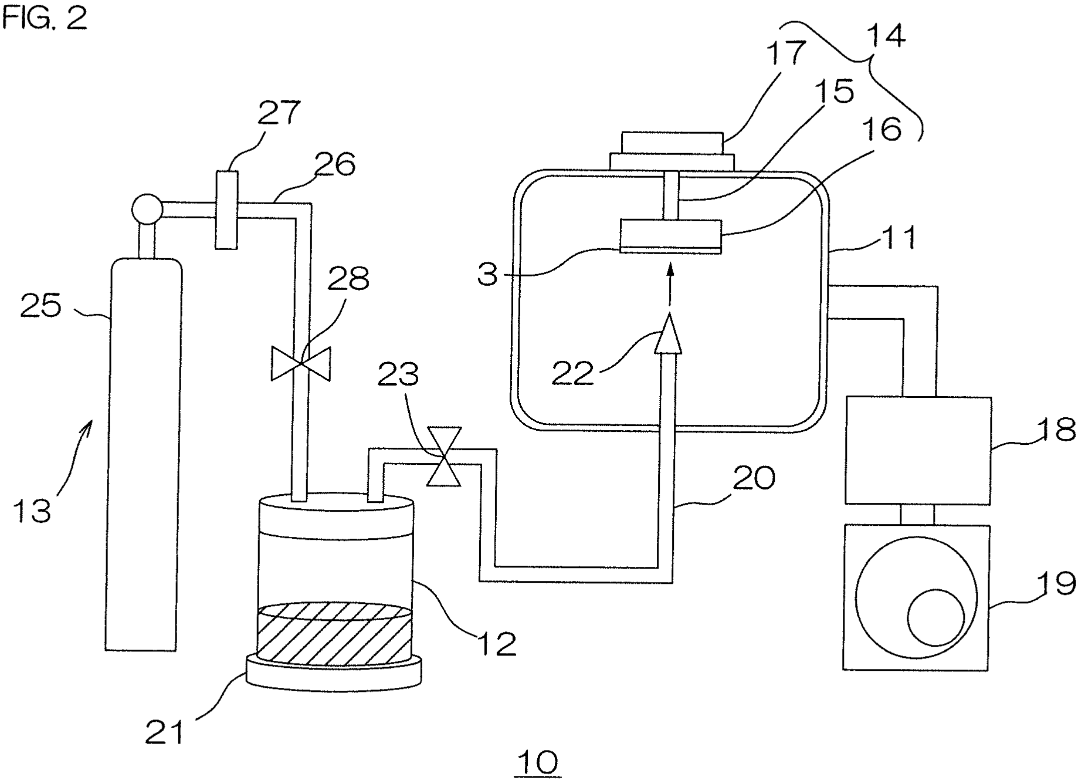


FIG. 3

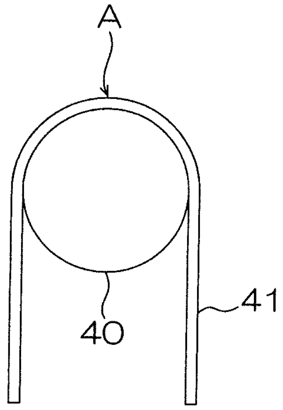

FIG. 4

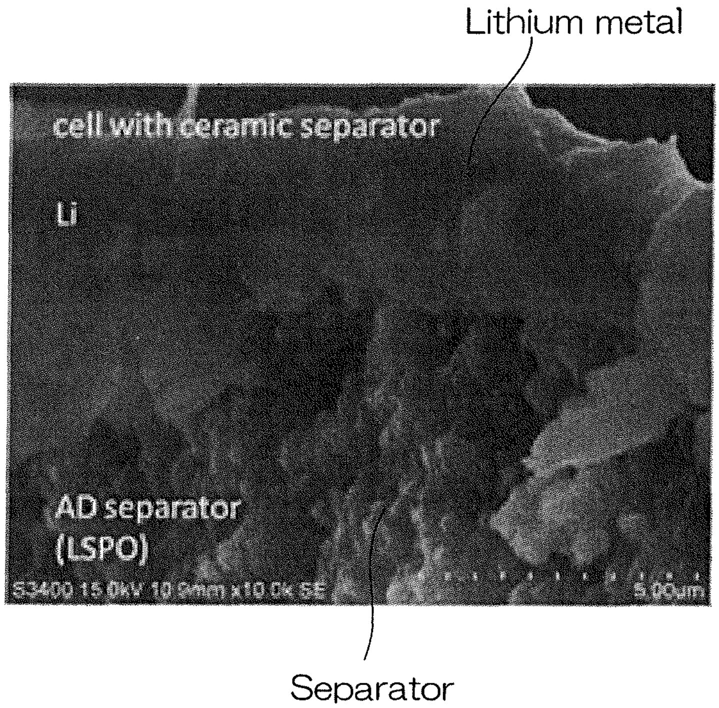
Lithium metal
cell with ceramic separator
Li
AD separator
(LSPO)
S3400 15.0kV 10.9mm x10.0k SE
5.00um
Separator

FIG. 5

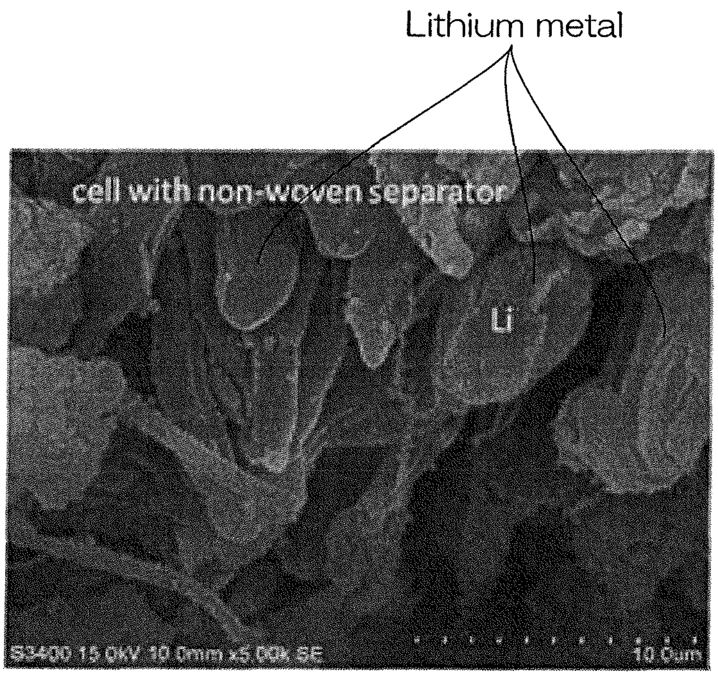
Lithium metal
cell with non-woven separator
Li
S3400 15.0kV 10.0mm x5.00k SE
10.0um

## INTERNATIONAL SEARCH REPORT

International application No. PCT/JP2015/066097

A. CLASSIFICATION OF SUBJECT MATTER
*H01M10/052*(2010.01)i, *H01M2/16*(2006.01)i, *H01M4/40*(2006.01)i, *H01M10/0566* (2010.01)i

According to International Patent Classification (IPC) or to both national classification and IPC

B. FIELDS SEARCHED

Minimum documentation searched (classification system followed by classification symbols)
H01M10/05-10/0587, H01M10/36-10/39, H01M4/00-4/62, H01M2/14-2/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2008-300098 A (Toyota Motor Corp.), 11 December 2008 (11.12.2008), paragraphs [0012] to [0053]; fig. 1 (Family: none) | 1,2,4,5<br>3,6 |
| X<br>Y | JP 2012-227136 A (Shin-Etsu Chemical Co., Ltd.), 15 November 2012 (15.11.2012), paragraphs [0013] to [0041] & US 2012/0258350 A1 & EP 2509138 A1 | 1,2,4,5<br>6 |
| Y | WO 2012/160698 A1 (Toyota Motor Corp.), 29 November 2012 (29.11.2012), paragraph [0027] & US 2014/0087270 A1 | 3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 August 2015 (26.08.15) | 08 September 2015 (08.09.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2015/066097

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-047353 A (NGK Insulators, Ltd.), 12 February 2004 (12.02.2004), paragraphs [0017] to [0018] (Family: none) | 6 |
| A | JP 2012-033366 A (Konica Minolta Holdings, Inc.), 16 February 2012 (16.02.2012), entire text (Family: none) | 1-6 |
| A | JP 2008-300300 A (Nitto Denko Corp.), 11 December 2008 (11.12.2008), entire text (Family: none) | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20100285372 A